# EUROPÄISCHE PATENTSCHRIFT

(11) **EP 0 529 753 B1**
(45) Veröffentlichungstag und Bekanntmachung des Hinweises auf die Patenterteilung: **10.05.1995**
(21) Anmeldenummer: 92250221.6
(22) Anmeldetag: 21.08.1992
(51) Int. Cl.: B01D 39/08

(54) **Verfahren zum Verbinden eines feinmaschigen Filtergewebes mit einem grobmaschigen Trägergewebe zu einem Doppelfilterband**
Method for jointing a fine-meshed filtering tissue with a coarse-meshed carrier tissue to a double filtering tape
Procédé pour l'obtention d'une bande filtrante double en joignant un tissu filtrant à mailles fines à un tissu porteur à grandes mailles

(30) Priorität: 23.08.1991 DE 4128396
(43) Veröffentlichungstag der Anmeldung: 03.03.1993
(73) Patentinhaber: MANNESMANN Aktiengesellschaft, 40027 Düsseldorf (DE)
(72) Erfinder: Triesch, Josef, W-4000 Düsseldorf (DE); Heidland, Helmuth, W-4830 Gütersloh 1 (DE)
(74) Vertreter: Meissner, Peter E., Dipl.-Ing.

(56) Entgegenhaltungen:
- EP-A- 0 467 147
- WO-A-87/00074
- DE-A- 3 908 581

## Beschreibung

Die Erfindung betrifft ein Verfahren zum Verbinden eines feinmaschigen Filtergewebes mit einem grobmaschigen Trägergewebe zu einem Doppelfilterband, insbesondere für einen Druckbandfilter zur Feinfiltration von Kühlschmierstoffen.

Die Verwendung von umlaufenden Kunststoff-Gewebebändern für die Filtration von Bearbeitungsflüssigkeiten ist bereits seit vielen Jahren Stand der Technik. Die Einsatzmöglichkeiten dieser Bänder sind begrenzt, da die Maschenweite, Gewebestabilität, Laufeigenschaft und Reinigungsmöglichkeit aufeinander abgestimmt sein müssen. Mit herkömmlichen Kunststoff-Gewebebändern wird eine durchschnittliche Filterfeinheit von 80 bis 100 »m erreicht, was in einigen Fällen ein Anwachsen des Feinschmutzpegels in der Bearbeitungsflüssigkeit und kurze Regenerationsintervalle beim Filtersystem zur Folge haben kann. Will man die Filtratqualität verbessern, so müssen mindestens zeitweise Faservliese eingesetzt werden. Mit derartigen Faservliesen ist zwar eine höhere Filterfeinheit erzielbar, doch sind Aufwand und Betriebskosten erheblich höher. Auch stellt die Entsorgung der verbrauchten Vliese ein Umweltproblem dar.

Eine höhere Filtratqualität ohne zusätzliche Filtermittel (Vliese) hat man mit einem neu entwickelten Doppelfilterband erreicht. Dieses Doppelfilterband ist eine Kombination von Träger- und Filtergewebe, welche nach einem speziellen Verfahren miteinander verbunden sind. Mit derartigen, in Sandwich-Bauweise erstellten Doppelfilterbändern läßt sich eine Feinfiltration, beispielsweise von Kühlschmierstoffen in der Größenordnung von 20 bis 50 »m erreichen, wobei im Hinblick auf die verschärften Umweltbedingungen und Entsorgungsprobleme durch Wegfallen der Faservliese diese neuen Konzepte zukunftsweisend und umweltfreundlich sind.

Ein bislang ungelöstes Problem besteht in der Verbindung des grobmaschigen Trägergewebes mit dem feinmaschigen Filtergewebe. Diese Verbindung muß dem Betrieb eines Bandfilters, beispielsweise eines Druckbandfilters mit umlaufendem oder reversierend bewegtem Filterband auch über einen längeren Zeitraum standhalten.

Nach einem internen Stand der Technik hat man das grobmaschige Trägergewebe und das feinmaschige Filtergewebe mittels Ultraschall an voneinander beabstandeten Stellen der Filtergewebeoberfläche miteinander verschmolzen. Diese Art der Verbindung hat sich jedoch als nachteilig herausgestellt, weil eine hinreichende Festigkeit der Verschmelzung nicht garantiert werden kann. So lösten sich die Verschmelzungspunkte entweder unter den hohen Beanspruchungen, insbesondere beim Umlenken des Bandes bzw. im Bereich der Abstreifer oder bei höheren Schmelztemperaturen ergaben sich Löcher im Träger- oder Filtergewebe.

Auch der Versuch, beide Gewebe miteinander zu vernähen brachte keinen Erfolg, weil unterschiedliche Spannungen in den beiden Geweben zwischen den Nähten zu Verwerfungen führten und die Nähte schließlich aufrissen.

Schließlich hat man versucht, beide Gewebe an einzelnen Stellen miteinander zu verweben. Abgesehen von den dadurch entstehenden sehr hohen Kosten ergaben sich die gleichen Nachteile, wie beim Vernähen der Gewebe. Insgesamt haben sich alle bisherigen Verfahren zum Verbinden von Träger- und Filtergewebe als nachteilig herausgestellt.

Ausgehend davon liegt der vorliegenden Erfindung die Aufgabe zugrunde, ein Verfahren zu schaffen, mit dem eine kostengünstige und dauerhafte Verbindung eines feinmaschigen Filtergewebes mit einem grobmaschigen Trägergewebe zu einem Kunststoff-Doppelfilterband möglich ist.

Zur Lösung der Aufgabe wird erfindungsgemäß vorgeschlagen, daß zwischen Filtergewebe und Trägergewebe ein Schmelzgitter aus thermisch verschmelzbarem Kunststoff mit niedrigerem Schmelzpunkt als dem des Filtergewebes und des Trägergewebes eingelegt wird und beide Gewebe mindestens bei Schmelztemperatur des Schmelzgitterwerkstoffes zusammengepreßt werden.

Mit einem nach diesem Verfahren hergestellten Kunststoff-Doppelfilterband laßt sich eine Feinfiltration von Kühlschmierstoffen in der Größenordnung von 20 bis 50 »m bei extrem hohen Standzeiten des Doppelfilterbandes durchführen. Das flächendeckende, miteinander verbundene Gewebe wiedersteht auch hohen Beanspruchungen im Umlenkbereich und im Bereich der Abstreifer. Der Einsatz von speziellen Bandspüleinrichtungen ist möglich und erhöht die Einsatzdauer zusätzlich. Die Herstellung derartiger Doppelfilterbänder ist äußerst einfach zu bewerkstelligen; das Verbinden der Filter- und Trägergewebebahnen nach Zwischenlegen der Schmelzgitterbahn kann beispielsweise durch auf entsprechende Temperatur beheizte Walzen geschehen, durch die das "Sandwich-Paket" aus Trägergewebe, Schmelzgitter und Filtergewebe hindurchgeführt wird. Das vorgeschlagene erfindungsgemäße Verfahren löst überraschend die eingangs beschriebenen Probleme beim Verbinden der Gewebe, so daß mit dem wirtschaftlichen Einsatz des Doppelfilterbandes die Betriebskosten des Filters reduzierbar sind. Die Entsorgungskosten sind gleichsam niedrig zu halten und die Filterfeinheit wird positiv beeinflußt.

Das grobmaschige Trägergewebe, mit Maschenweiten beispielsweise zwischen 300 und 1000 »m bringt die notwendige Zugfestigkeit, während das Filterband mit Maschenweiten von 20 bis 50 »m einerseits den nötigen Feinheitsgrad aufweist und andererseits gut zu reinigen ist.

## Patentansprüche

1. Verfahren zum Verbinden eines feinmaschigen Filtergewebes mit einem grobmaschigen Trägergewebe zu einem Kunststoff-Doppelfilterband, insbesondere für einen Druckbandfilter zur Feinfiltration von Kühlschmierstoffen, dadurch gekennzeichnt,
daß zwischen Filtergewebe und Trägergewebe ein Schmelzgitter aus thermisch verschmelzbarem Kunststoff mit niedrigerem Schmelzpunkt als der des Filter- und des Trägergewebes eingelegt wird und beide Gewebe mindestens bei Schmelztemperatur des Schmelzgitterwerkstoffes zusammengepreßt werden.

## Claims

1. Method for joining a fine-mesh filter fabric to a coarse-mesh support fabric to form a plastics-material double-filter belt, in particular for a press-belt filter for the fine filtration of cooling lubricants,
characterized in that a melt lattice of heat-meltable plastics material having a lower melting point than that of the filter fabric and of the support fabric is inserted between the filter fabric and the support fabric and both fabrics are pressed together at least at the melting temperature of the melt lattice material.

## Revendications

1. Procédé pour relier un tissu filtrant à mailles fines à un tissu porteur à grandes mailles en une bande de filtre double en matière synthétique, en particulier pour un filtre à bande sous pression pour la filtration fine de réfrigérants lubrifiants,
caractérisé en ce que, entre le tissu filtrant et le tissu porteur, il est disposé un treillis de fusion en une matière synthétique pouvant être thermiquement fondue, ayant un point de fusion plus faible que celui du tissu filtrant et du tissu porteur, et les deux tissus sont pressés ensemble au moins à la température de fusion de la matière du treillis de fusion.
